# EUROPEAN PATENT APPLICATION

(11) **EP 3 098 411 A1**
(43) Date of publication of application: **30.11.2016**
(21) Application number: 14863761.4
(22) Date of filing: 20.11.2014
(51) Int. Cl.: F01N 3/28, B60K 13/04, F01N 13/08, F02M 26/00

(54) **ENGINE DEVICE**

(30) Priority: 22.11.2013 JP 2013242242; 22.11.2013 JP 2013242243
(71) Applicant: Yanmar Co., Ltd., Osaka-shi, Osaka 530-8311 (JP)
(72) Inventor: MITSUDA, Masataka, Osaka-shi, Osaka 530-8311 (JP); FUKUYOSHI, Shinya, Osaka-shi, Osaka 530-8311 (JP); KUSAKA, Hokuto, Osaka-shi, Osaka 530-8311 (JP); TAGUCHI, Isao, Osaka-shi, Osaka 530-8311 (JP)
(74) Representative: Hoffmann Eitle
(86) International application number: PCT/JP2014/080783
(87) International publication number: WO 2015/076338

(57) **Abstract**

An issue of the present invention is to provide an engine device which is provided with an exhaust gas purification device, and which can be efficiently disposed in an engine installation space. A diesel engine 1 is provided with an exhaust gas treatment case 2 that treats exhaust gas, and an exhaust gas purification device 2 is disposed at an upper face side of the diesel engine 1. In addition, the engine device has a structure in which either the diesel engine 1 or the exhaust gas purification device 2 is provided with a temporary locking body 90, while the other one is provided with a temporary locking notch 92, in which a temporary locking body 87 or the temporary locking notch 92 is disposed below an attachment part of the diesel engine 1.

## Description

### Technical Field

The invention of the present application relates to engine devices such as a diesel engine provided with an exhaust gas purification device, and in particular, to an engine device to be provided with working machines such as, for example, a wheel loader, a backhoe, and a forklift car.

### Background Art

Hitherto, there has been developed a technique in which by providing an exhaust gas purification device (diesel particulate filter) on an exhaust path of an engine, an oxidation catalyst, a soot filter, or the like of the exhaust gas purification device purifies exhaust gas discharged from a diesel engine (see, for example, Patent document 1). In addition, in recent years, it has been required that, for environmental measures, in the fields of working machines such as construction machines and agriculture machines, an exhaust gas purification device be provided in a diesel engine for use in such machines (see, for example, patent document 2).

### Related Art Documents

### Patent Documents

Patent document 1: Japanese Unexamined Patent Application Publication No. 2000-145430
Patent document 2: Japanese Unexamined Patent Application Publication No. 2007-182705

### Summary of Invention

### Problems to be Solved by the Invention

Incidentally, in the case of providing an exhaust gas purification device, if the exhaust gas purification device is simply disposed instead of a muffler in an exhaust path of an engine, the exhaust gas purification device is extremely heavier than the muffler. Accordingly, if a support structure of the muffler, disclosed in Patent document 2, in a construction machine, is diverted to the support structure of the exhaust gas purification device, there is a problem in that the exhaust gas purification device cannot stably be installed. In particular, regarding a working machine such as a wheel loader, in order to reduce its turning radius for preventing the machine from being in contact with the surrounding, it is required that a traveling machine body itself be made compact, thus restricting engine installation space. In addition, at the time of mounting the exhaust gas purification device to the diesel engine, there has been a large load of the mounting operation on a worker since the exhaust gas purification device is a heavy object.

Accordingly, the invention of the present application is intended to provide an engine device improved on the basis of studying these circumstances.

### Means of Solving the Problems

The invention in claim 1 is an engine device comprising an exhaust gas treatment device that treats exhaust gas from an engine, in which the exhaust gas treatment device is disposed on an upper face side of the engine, wherein the engine device has a structure in which either the engine or the exhaust gas treatment device is provided with a temporary locking body, and the other one is provided with a temporary locking notch, and wherein the temporary locking body and the temporary locking notch are disposed on a lower side of an attachment part of the engine.

The invention in claim 2 is the engine device according to claim 1, wherein the engine device has a structure in which the exhaust gas treatment device is mounted on a flywheel housing, and a recirculation exhaust gas pipe as the attachment part extends between the engine and the exhaust gas treatment device.

The invention in claim 3 is the engine device according to claim 1 or 2, wherein an exhaust outlet pipe is fixed to an exhaust manifold for the engine via a throttle device, and the exhaust outlet pipe is connected to an inlet pipe of the exhaust gas treatment device.

The invention in claim 4 is the engine device according to claim 3, wherein the exhaust outlet pipe is S-shaped in planar view.

The invention in claim 5 is the engine device according to claim 1, wherein the engine device has a structure provided with an engine frame on which the engine and the like are mounted, wherein an exhaust manifold installation portion of the engine is provided with an exhaust throttle device, and wherein one side face of the exhaust gas treatment device, which faces the engine frame, and an outer side face of the exhaust throttle device are formed to be flush.

The invention in claim 6 is the engine device according to claim 5, wherein one side face of the exhaust gas treatment device, and also an outer side face of an alternator with respect to an outer side face of the exhaust throttle device are formed to be flush.

The invention in claim 7 is the engine device according to claim 5 or 6, wherein the exhaust throttle device is offset with respect to a gas inlet of the exhaust throttle device.

### Effects of Invention

According to the invention in claim 1, an engine device comprises an exhaust gas treatment device that treats exhaust gas from an engine, and the exhaust gas treatment device is disposed on an upper face side of the engine. The engine device has a structure in which: either the engine or the exhaust gas treatment device is provided with a temporary locking body, and the other one is provided with a temporary locking notch; and the temporary locking body and the temporary locking notch are disposed on a lower side of an attachment part of the engine. Thus, workability in the operation of mounting the exhaust gas purification device to the engine can be made efficient. In addition, the post-attachment bolt for the exhaust gas treatment device can be fastened at a position off the attachment part, so that the operation of attaching and detaching the exhaust gas treatment device can be increased.

According to the invention in claim 2, the engine device has a structure in which the exhaust gas treatment device is mounted on a flywheel housing, and a recirculation exhaust gas pipe as the attachment part extends between the engine and the exhaust gas treatment device. Thus, although the attachment height can compactly be formed by diverting the recirculation exhaust gas pipe, by temporarily supporting the exhaust gas treatment device on the upper face side of the flywheel housing via the temporary locking body, fastening workability can be increased.

According to the invention in claim 3, an exhaust outlet pipe is fixed to an exhaust manifold for the engine via a throttle device, and the exhaust outlet pipe is connected to an inlet pipe of the exhaust gas treatment device. Thus, only by altering the specification of the exhaust outlet pipe, the attachment position, etc., of the exhaust gas treatment device can easily be altered, and the engine with the exhaust gas treatment device placed thereon can be installed so as to be easily adapted for the engine room spaces of various working vehicles.

According to the invention in claim 4, the exhaust outlet pipe is S-shaped in planar view. Thus, the exhaust gas treatment device can be offset to be disposed with respect the inlet pipe of the exhaust gas treatment device. Accordingly, the space of a cooling water pipe connected between the engine and the exhaust throttle device can be reserved, so that the cooling water pipe can easily be prevented from being damaged due to its contact with the engine by mechanical vibration.

According to the invention in claim 5, the engine device has a structure provided with an engine frame on which the engine and the like are mounted, an exhaust manifold installation portion of the engine is provided with an exhaust throttle device; and one side face of the exhaust gas treatment device, which faces the engine frame, and an outer side face of the exhaust throttle device are formed to be flush. Thus, although the engine room structure that surrounds the engine by the machine frame can easily be formed, the workability of mounting the engine with the exhaust gas treatment device disposed therein can easily be increased.

According to the invention in claim 6, one side face of the exhaust gas treatment device, and also an outer side face of an alternator with respect to an outer side face of the exhaust throttle device are formed to be flush. Thus, this can compactly dispose the one side face of the exhaust gas purification device and the outside face of the exhaust throttle device so as to be close to each other by causing both to face a flat vertical wall face of the machine frame, enabling compactly mounting of the diesel engine in limited engine room space.

According to the invention in claim 7, the exhaust throttle device is offset with respect to a gas inlet of the exhaust throttle device. Thus, the space of the cooling water pipe connected between the engine and the exhaust throttle device can be reserved, so that the cooling water pipe can easily be prevented from being damaged due to its contact with the engine by mechanical vibration.

### Brief Description of the Drawings

[FIG. 1] FIG. 1 is a right side view of a diesel engine of the invention of the present application.
[FIG. 2] FIG. 2 is a left side view of the diesel engine.
[FIG. 3] FIG. 3 is a plan view of the diesel engine.
[FIG. 4] FIG. 4 is a back view of the diesel engine.
[FIG. 5] FIG. 5 is a front view of the diesel engine.
[FIG. 6] FIG. 6 is a left side view of the diesel engine in a state in which an oil filter is removed.
[FIG. 7] FIG. 7 is a plan view of the diesel engine in a state in which the oil filter is removed.
[FIG. 8] FIG. 8 is a perspective front view of a diesel engine of the invention of the present application.
[FIG. 9] FIG. 9 is a perspective back view of the diesel engine.
[FIG. 10] FIG. 10 is an enlarged perspective plan view of the diesel engine.
[FIG. 11] FIG. 11 is a partially enlarged view of FIG. 3.
[FIG. 12] FIG. 12 is a perspective view of an exhaust gas purification device.
[FIG. 13] FIG. 13 is a view illustrating assembly (disassembly) of the exhaust gas purification device.
[FIG. 14] FIG. 14 is an enlarged view illustrating the configuration of an attachment portion on a flywheel housing.
[FIG. 15] FIG. 15 is a left side view of a wheel loader as one example of a working machine provided with a diesel engine.
[FIG. 16] FIG. 16 is a plan view of the wheel loader illustrated in FIG. 15.
[FIG. 17] FIG. 17 is an enlarged right side view of the wheel loader illustrated in FIG. 15, illustrating turning of a sheet frame.
[FIG. 18] FIG. 18 is an enlarged right side view of the wheel loader illustrated in FIG. 15, illustrating turning of a bonnet cover.
[FIG. 19] FIG. 19 is a side view of a forklift as another example of the working machine provided with the diesel engine.
[FIG. 20] FIG. 20 is a plan view of the forklift car illustrated in FIG. 19.

### Modes for Carrying out the Invention

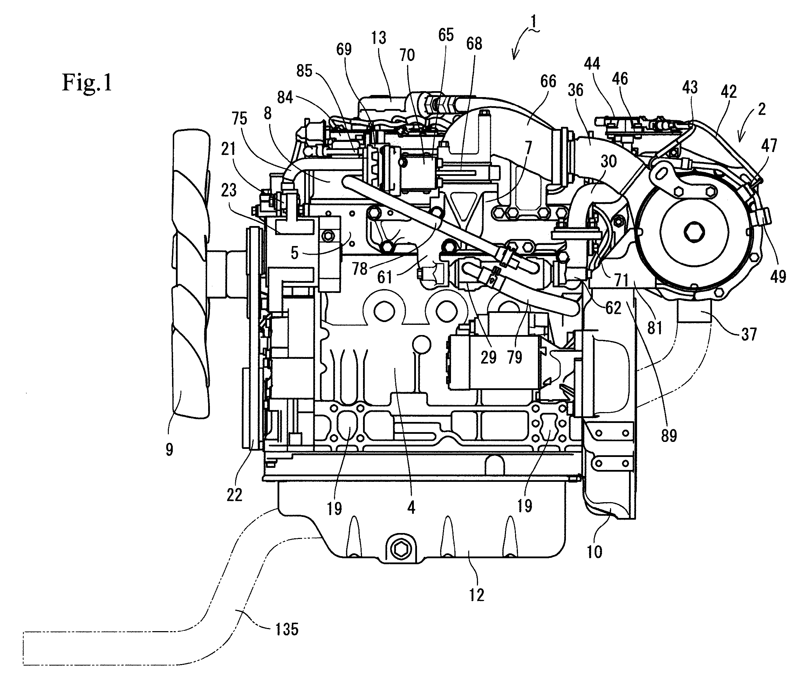

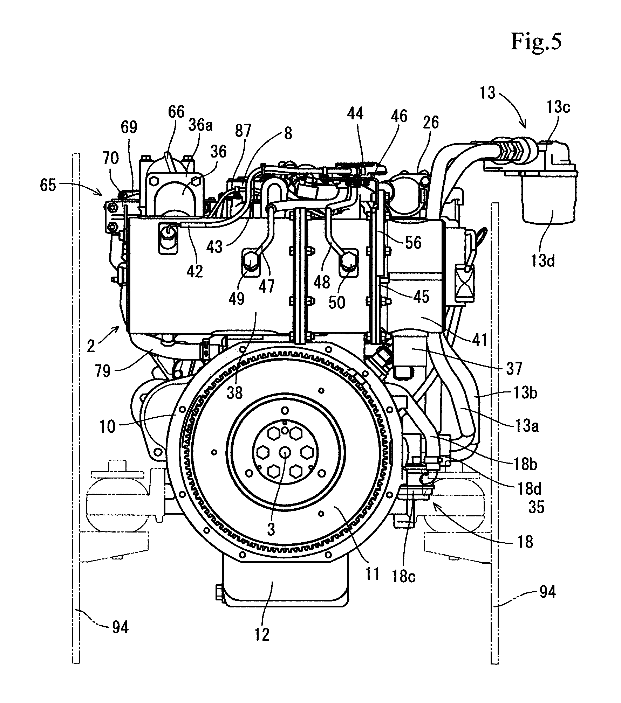

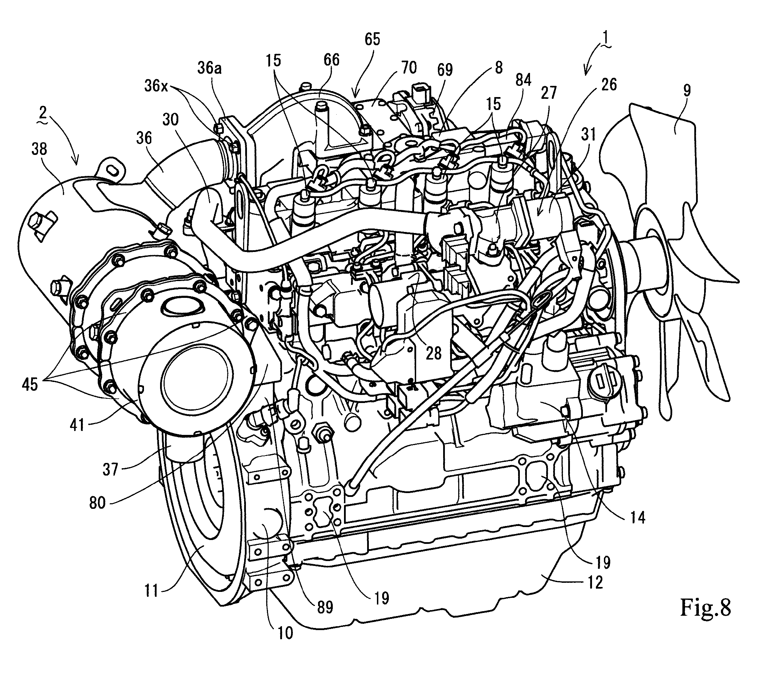

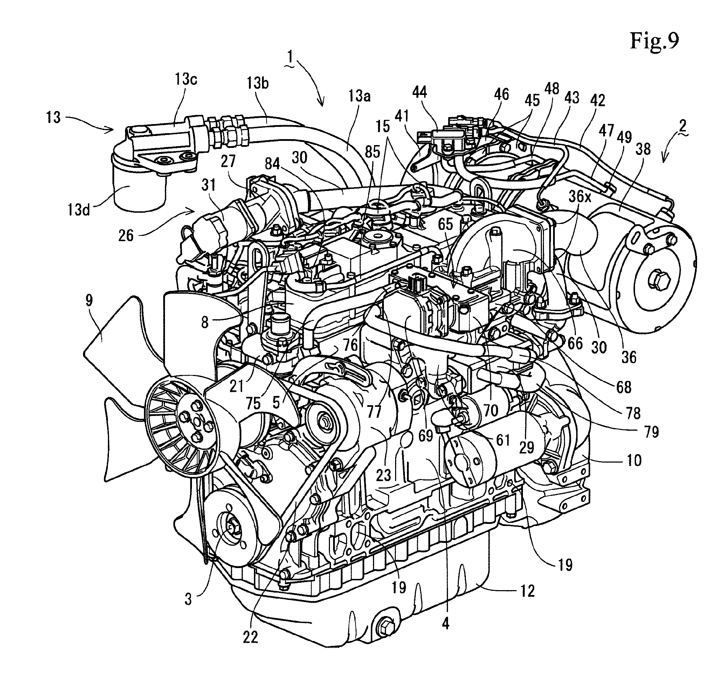

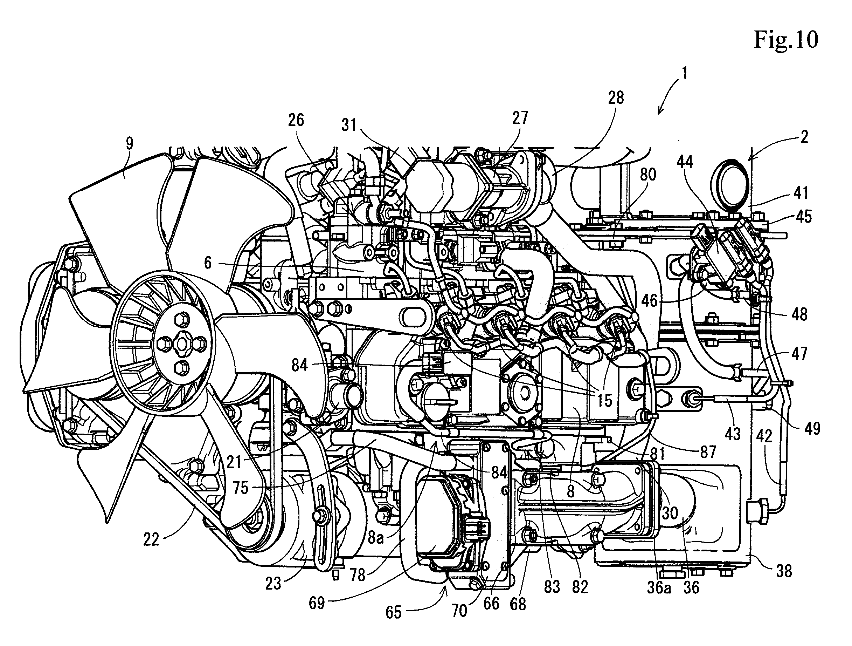

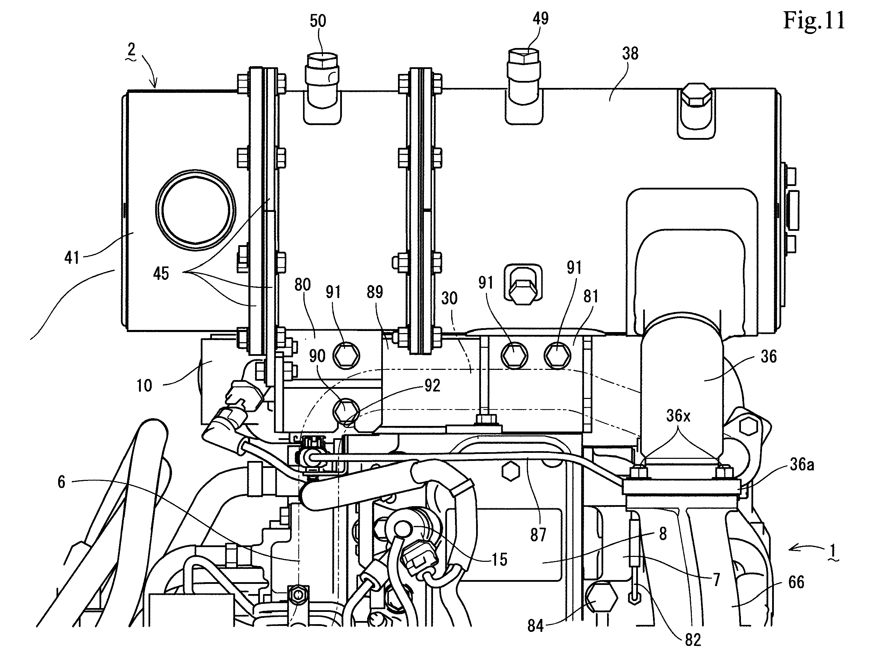

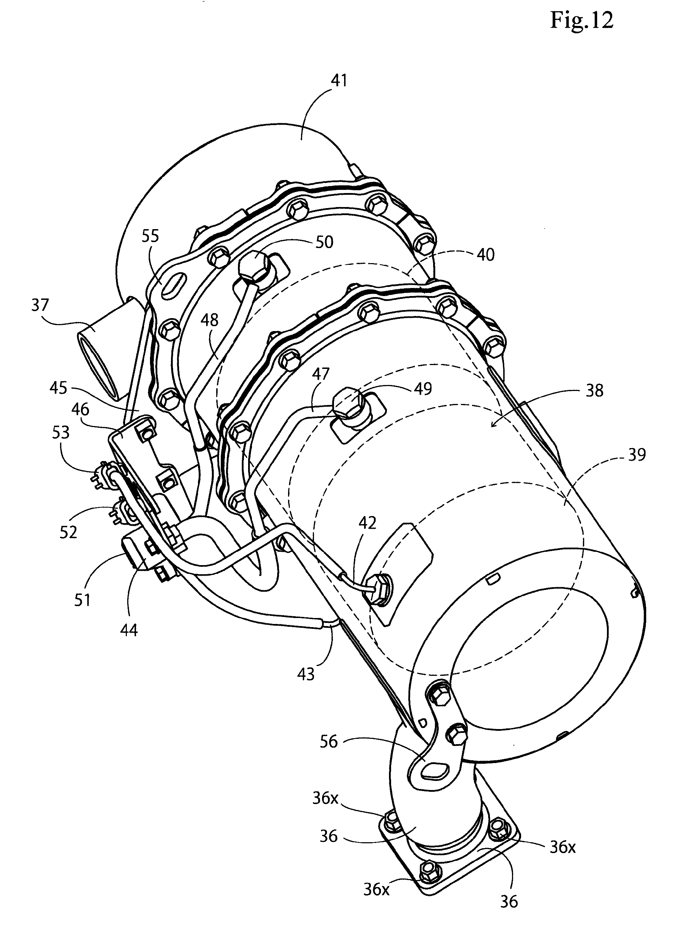

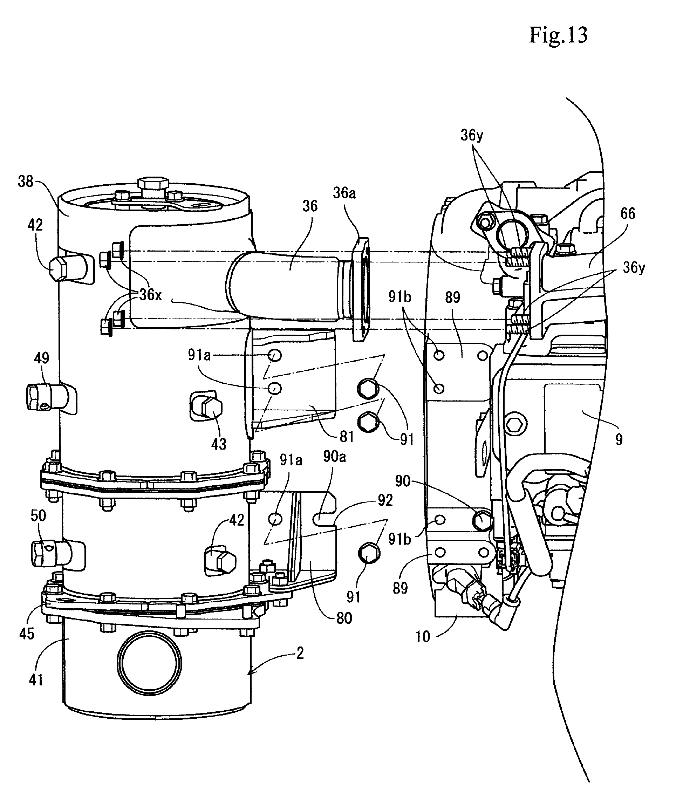

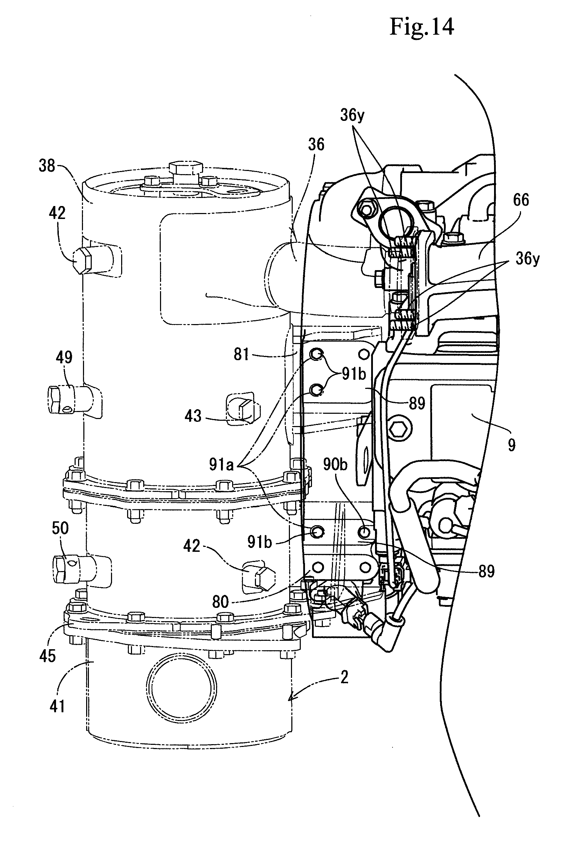

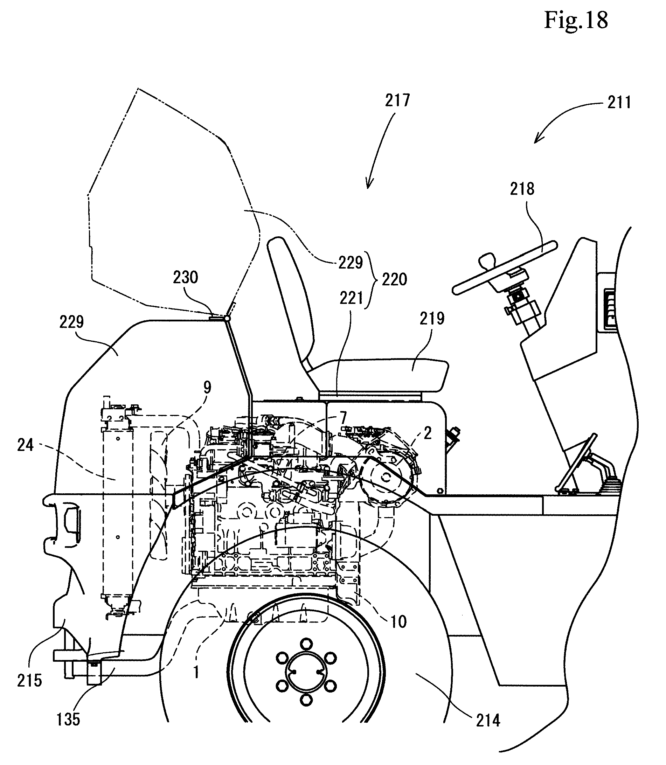

Embodiments of an engine device of the invention of the present application and a working machine provided with the engine device will be described below with reference to FIGs. 1 to 18 on the basis of these drawings. As one example of the working machine for the embodiment, a wheel loader including a loader device as a working portion will be exemplified and its configuration will be described in detail below.

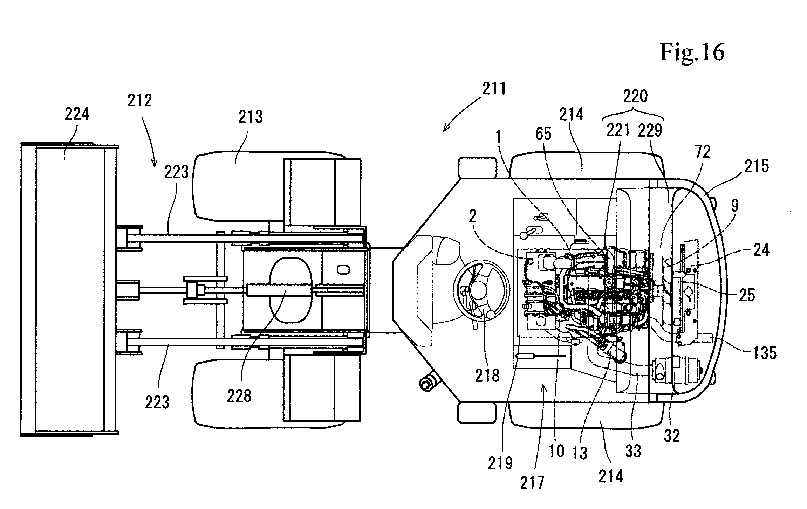

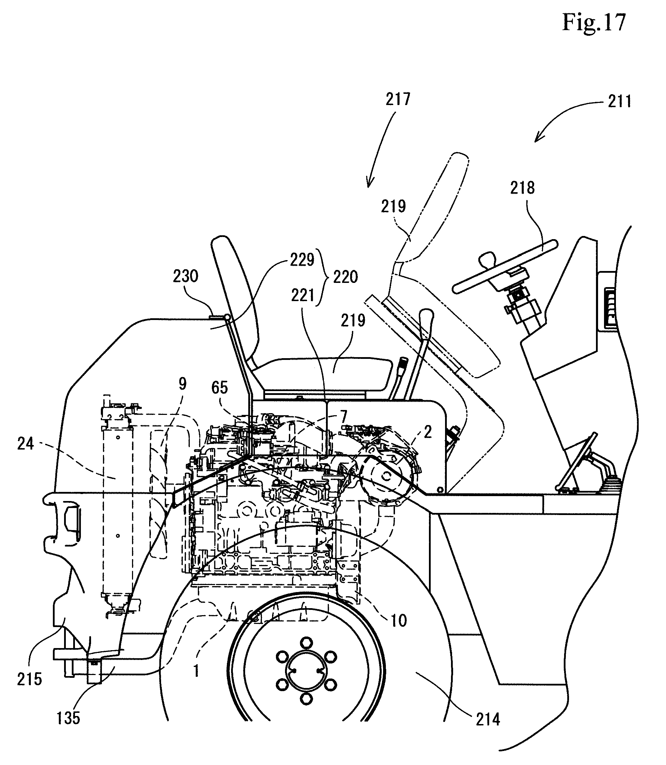

First, regarding an engine device of the invention of the present application, with reference to FIGs. 1 to 11, a diesel engine 1 that is mounted as a motor on a working machine such as a wheel loader 211 (see FIGs. 16 and 17), which is described later, will be exemplified and described below. As described above, the diesel engine 1 is provided with an exhaust gas purification device 2 that is connected to the diesel engine 1 via an exhaust throttle device 65. The exhaust gas purification device 2 removes particular material (PM) of exhaust gas of the diesel engine 1, and also has an operation of reducing carbon monoxide (CO) and hydrocarbon (HC) in the exhaust gas of the diesel engine 1.

The diesel engine 1 includes a cylinder block 4 incorporating an engine output crank shaft 3 and a piston (not illustrated). The cylinder block 4 has a cylinder head 5 placed thereon. The cylinder head 5 has an intake manifold 6 disposed on a left side face thereof. The cylinder head 5 has an exhaust manifold 7 disposed on a right side face thereof. The cylinder head 5 has a head cover 8 disposed on an upper side face thereof. The cylinder block 4 has a cooling fan 9 provided at a rear side face thereof. The cylinder block 4 has a flywheel housing 10 provided at a front side face thereof. The flywheel housing 10 has a flywheel 11 disposed therein. The flywheel 11 is rotatably supported by the crank shaft 3 (engine output shaft). The diesel engine 1 is configured so that power of the diesel engine 1 is output to an operating portion of a working vehicle (such as a backhoe or a forklift) via the crank shaft 3.

The cylinder block 4 has an oil pan 12 disposed on a lower face thereof. The oil pan 12 stores lubricant oil. The lubricant oil in the oil pan 12 is suctioned by an oil pump (not illustrated) disposed close to the left side face in the cylinder block 4, and is supplied to each lubrication portion of the diesel engine 70 via an oil cooler 18 and the oil filter 13, which are disposed at a left side face of the cylinder block 4. After that, the lubrication oil supplied to each lubrication portion is returned to the oil pan 12. An oil pump (not illustrated) is configured to be driven by rotation of the crank shaft 3. The oil cooler 18 is for cooling the lubrication oil with cooling water.

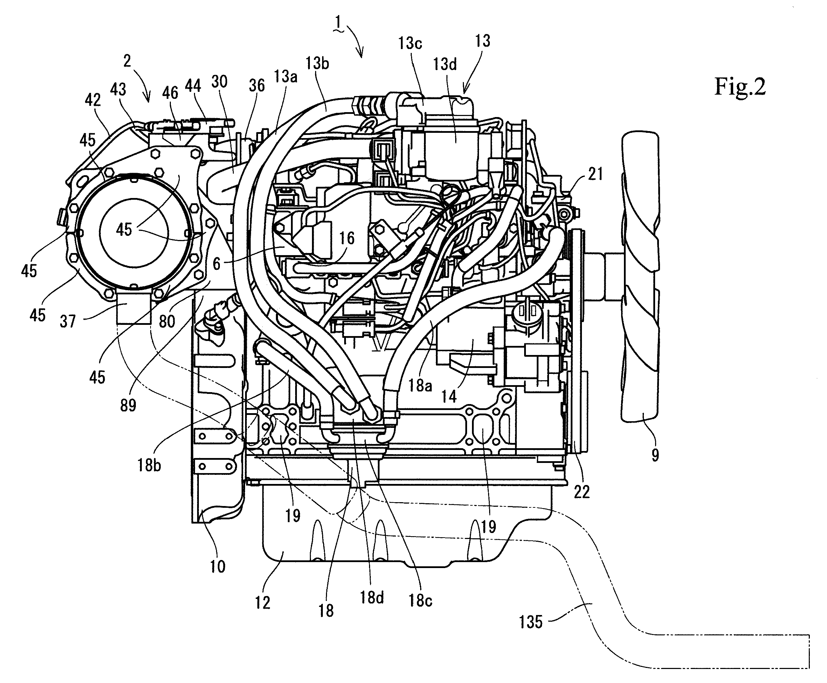

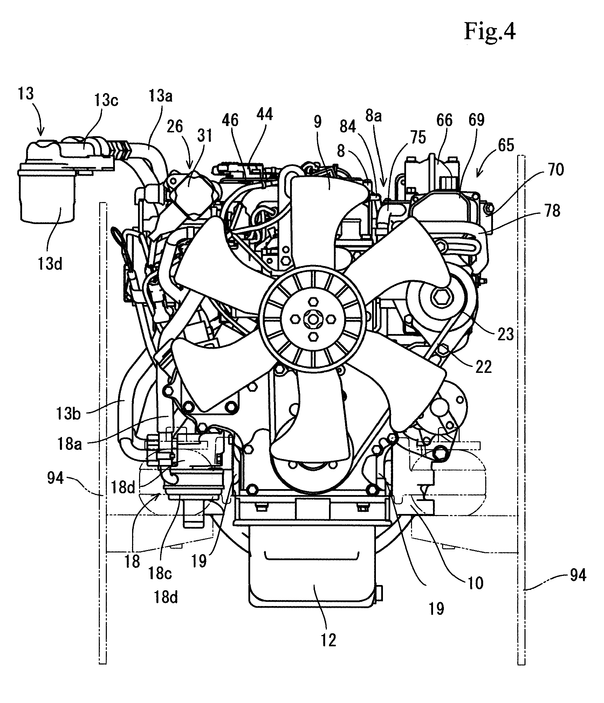

As illustrated in FIGs. 2 and 4, the oil cooler 18 is attached to a left side face of the cylinder block 4 above the oil pan 12. The oil cooler 18 has a structure in which cooling water pipes 18a and 18b are connected to a lower part of the oil cooler 18 so that cooling water is circulated in the oil cooler 18. In addition, the oil cooler 18 has an oil pipe connection portion 18d for connection to oil pipes 13a and 13b above a cooling water connection portion 18c for connection to the cooling water pipes 18a and 18b. Accordingly, the oil cooler 18 is connected to the oil filter 13, which is arranged above the cylinder block 4, by being connected to the oil pipes 13a and 13b via the oil pipe connection portion 18d.

As illustrated in FIGs. 2 to 4, the oil filter 13 is disposed at a position separated from the left side face of the cylinder head 5 to its left side. The oil filter 13 is disposed at a position having almost the same height as the head cover 8, and is remotely disposed with respect to the oil cooler 18 at a lower side of the left side of the cylinder block 4. In addition, the oil filter 13 is configured to have at its upper side an oil pipe connection portion 13c for connection to oil pipes 13a and 13b, and at lower side a filter portion 13d that removes impurities in the lubrication oil. In other words, the oil filter 13 is disposed at a position separated than the left side face of the diesel engine 1, and is connected to the oil pipes 13a and 13b at a position that is higher than an upper face height (the height of an upper face of the head cover 9) of the diesel engine 1.

Accordingly, as illustrated in FIG. 4, when the diesel engine 1 is installed on a machine frame 94, the oil filter 13 can be disposed outside the machine frame 94. In other words, the left side face of the 1 is covered with an inside face of the machine frame 94, while the oil filter 13 is disposed outside the machine frame 94. The oil pipes 13a and 13b is provided from below to above along the inside face of the machine frame 94, whereby the oil filter 13 is connected to the oil cooler 18 at a position at which the oil filter 13 is above the machine frame 94. This makes it possible for an operator to perform an operation outside the machine frame 94 in the case of exchanging the filter portion 13d. Thus, the workability and maintainability can be improved.

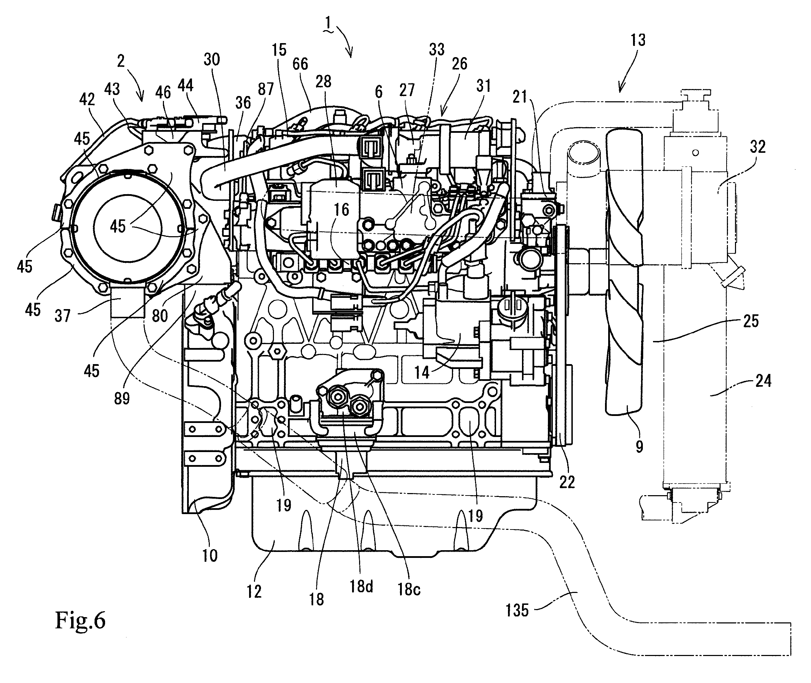

As illustrated in FIGs. 2 and 6, a fuel supply pump 14 for supplying fuel is attached to the left side face of the cylinder block 4 above (below the intake manifold 6) the oil cooler 18. The diesel engine 1 is provided with injectors 15 for four cylinders that each have an electromagnetic switching fuel injection valve (not illustrated). A fuel tank (not illustrated) that is installed in a working vehicle is connected to each injector 15 via the fuel supply pump 14, a cylindrical common rail 16, and a fuel filter (not illustrated).

The fuel in the fuel tank is sent under pressure from the fuel supply pump 14 to the common rail 16, so that the fuel at high pressure is stored in the common rail 16. By controlling switching of the fuel injection valve of each injector 15, the fuel at high pressure in the common rail 16 is injected from each injector 15 to each cylinder of the diesel engine 1.

In a region close to a right side of a rear face of the cylinder block 4, as illustrated in FIGs. 1 and 4, a cooling water pump 21 for circulating cooling water is disposed coaxially with a fan shaft of the cooling fan 9. Rotation of the crank shaft 3 drives the cooling water pump 21 together with the cooling fan 9 via a cooling fan driving V belt 22. Cooling water in a radiator 24 installed in a working vehicle is supplied to the cooling water pump 21 by driving the cooling water pump 21. Subsequently, the cooling water is supplied to the cylinder block 4 and the cylinder head 5 so as to cool the diesel engine 1. Note that an alternator 23 is provided at a right side of the cooling water pump 21.

As illustrated in FIGs. 1 and 2, engine foot mounting portions 19 are respectively provided on right and left sides of the cylinder block 4. Engine foot bodies (not illustrated) that each have a rubber vibration insulator and are connected to right and left side walls are respectively fastened to the engine mounting portions 19 by bolts. The diesel engine 1 is supported by the machine frame 94 of a traveling machine body of the working vehicle so as to insulate vibration via the engine foot bodies. This inhibits vibration of the diesel engine 1 from being transmitted to the machine frame 94.

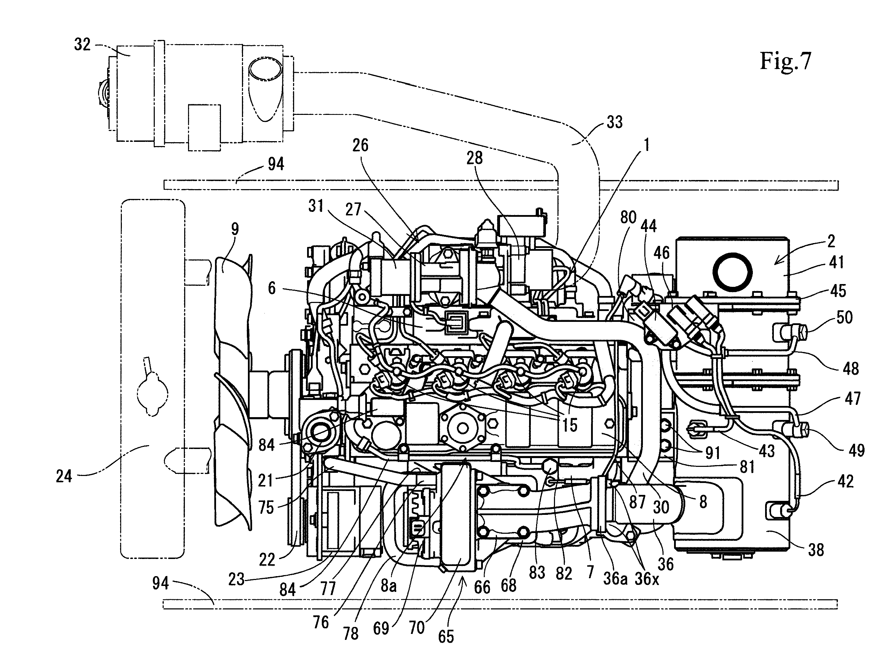

Further, an EGR device 26 (exhaust gas recirculation device) will be described with reference to FIGs. 1 to 8. An air cleaner 32 (see FIG. 7) is connected to an inlet portion of the intake manifold 6, which upwardly projects, via the EGR device 26. Fresh air (outside air) is sent from the air cleaner 32 to the intake manifold 6 via the EGR device 26. The EGR device 26 includes: an EGR body case 27 (collector) that mixes a portion of (EGR gas from the exhaust manifold) of the exhaust gas of the diesel engine and the fresh air (outside air from the air cleaner 32) and that supplies the mixture to the intake manifold 6; an intake throttle member 28 that causes the EGR body case 27 to communicate with the air cleaner 32 via an intake pipe 33; a r recirculation exhaust gas pipe 30 that is connected as a reflux pipe to the exhaust manifold 7 via the EGR cooler 29; and an EGR valve member 31 that causes the EGR body case 27 to communicate with the recirculation exhaust gas pipe 30.

In other words, the intake manifold 6 and the intake throttle member 28 for introducing the fresh air are connected to each other via the EGR body case 27. An outlet side of the recirculation exhaust gas pipe 30, which extends from the exhaust manifold 7, is in communication with the EGR body case 27. The EGR body case 27 is formed to be long cylindrical. The intake throttle member 28 is fastened to one longitudinal end portion of the EGR body case 27 by bolt. A downward opening end of the EGR body case 27 is detachably fastened to an inlet portion of the intake manifold 6 by bolt.

In addition, an outlet side of the recirculation exhaust gas pipe 30 is connected to the EGR body case 27 via the EGR valve member 31. The inlet side of the recirculation exhaust gas pipe 30 is connected to a lower face side of the exhaust manifold 7 via the EGR cooler 29. The recirculation exhaust gas pipe 30 is provided above the flywheel housing 10 so as to pass on the front face of the cylinder head 5. In addition, by adjusting an opening degree of an EGR valve in the EGR valve member 31, the amount of supply of EGR gas to the EGR body case 27 is adjusted.

With the above configuration, the fresh air (outside air) is supplied from the air cleaner 32 into the EGR body case 27 via the intake throttle member 28, while the EGR gas (portion of the exhaust gas discharged from the exhaust manifold) is supplied from the exhaust manifold 7 into the EGR body case 27 via the EGR valve member 31. After the fresh air from the air cleaner 32 and the EGR gas from the exhaust manifold 7 are mixed in the EGR body case 27, the mixture gas in the EGR body case 27 is supplied to the intake manifold 6. In other words, a portion of the exhaust gas discharged from the diesel engine 1 to the exhaust manifold 7 is refluxed from the intake manifold 6 to the diesel engine 1, whereby the maximum combustion temperature in high load operation mode decreases, and the amount of discharge of NOx (nitrogen oxides) from the diesel engine 1 is reduced.

When the EGR cooler 29 is disposed as described above, and an EGR gas output pipe 61 is formed so as to be incorporated into the exhaust manifold 7. In addition, a pipe coupling member 62 is fastened to the exhaust manifold 7. An EGR gas inlet portion of the EGR cooler 29 is supported by the EGR gas output pipe 61, and by supporting the an EGR gas outlet portion of the EGR cooler 29 by the pipe coupling member 62, which connects the recirculation exhaust gas pipe 30, the EGR cooler 29 is disposed to be separated from the cylinder block 4 (specifically the left side face).

In addition, as illustrated in FIGs. 1 to 3, and FIGs. 6 to 8, the recirculation exhaust gas pipe 30 connected to the pipe coupling member 62 are provided so as to pass below the purification inlet pipe 36 of the exhaust gas purification device 2. In other words, the recirculation exhaust gas pipe 30 and the purification inlet pipe 36 cross each other above the flywheel housing 10 so that the purification inlet pipe 36 is positioned above the recirculation exhaust gas pipe 30. Accordingly, above the flywheel housing 10 in the front of the cylinder head 5, the recirculation exhaust gas pipe 30 extends from the right side face to left side face of the cylinder head 5, while the purification inlet pipe 36 extends in a front-back direction so as to be over information of the recirculation exhaust gas pipe 30.

As described above, as illustrated in FIGs. 1 to 9, on the right side face of the cylinder block 4, the EGR cooler 29 for cooling the EGR gas is disposed below the exhaust manifold 7. Accordingly, the exhaust manifold 7 and the EGR cooler 29 can compactly be disposed along one side face of the diesel engine 1. In addition, at the right side (the side of the exhaust manifold 7) of the diesel engine 1, a cooling water pipe path that connects the cooling water pump 21 to the EGR cooler 29 and the exhaust throttle device 65 is provided. This supplies the cooling water from the cooling water pump 21 not only to a water cooling portion of the diesel engine 1 but also to its portion is supplied to the EGR cooler 29 and the exhaust throttle device 65.

In addition, as illustrated in FIGs. 1, 3 to 5, and 7 to 10, at the right side of the cylinder head 5, the exhaust throttle device 65, which increases an exhaust pressure of the diesel engine 1, is provided. An exhaust outlet of the exhaust manifold 7 is upwardly opened. The exhaust outlet of the exhaust manifold 7 is detachable connected to a relay pipe 66 via the exhaust throttle device 65 in order to adjust the exhaust pressure of the diesel engine 1. The exhaust throttle device 65 includes: a throttle valve case 68 including therein an exhaust throttle valve; an actuator case including a transmission mechanism for power from a motor (actuator) that controls the throttle valve to open; and a water cooling case 70 that connects the actuator case 69 to the throttle valve case 68. With the power transmission mechanism, the motor is configured such that its rotation shaft can move in connection with the rotation shaft of the throttle valve in the throttle valve case 68, a gear, etc.

The throttle valve case 68 is placed on the exhaust outlet of the exhaust manifold 7, the relay pipe 66 is placed on the throttle valve case 68, and the relay pipe 66 is fastened to an exhaust outlet body of the exhaust manifold 7 by four bolts via the throttle valve case 68. A lower face side of the throttle valve case 68 is fixed to the exhaust outlet body of the exhaust manifold 7. A lower side opening portion of the relay pipe 66 is fixed onto an upper face side of the throttle valve case 68. A lateral opening portion of the relay pipe 66 is connected to the purification inlet pipe 36 of the exhaust gas purification device 2.

Accordingly, the exhaust manifold 7 is connected to the exhaust gas purification device 2 via the relay pipe 66 and the exhaust throttle device 65. The exhaust gas, which has moved from the outlet portion of the exhaust manifold 7 into the exhaust gas purification device 2 via the throttle valve case 68 and the relay pipe 66, is purified. Subsequently, the exhaust gas moves from a purification outlet pipe 37 to a tail pipe 135, and is finally discharged outside.

In addition, the relay pipe 66 is provided with a connection support portion 66a that is connected to the exhaust manifold 7 at a position between the exhaust throttle device 65 and the purification inlet pipe 36 of the exhaust gas purification device 2. The connection support portion 66a is formed of a wing-shaped plate that is projected toward the exhaust manifold 7 than an outer circumferential face of the relay pipe 66, and is fastened to a right side face of the exhaust manifold 7. The relay pipe 66 is connected to the exhaust outlet of the exhaust manifold 7 via the exhaust throttle device 65, and is supported by connecting to a side face of the exhaust manifold 7 a pipe portion of the exhaust manifold 7 in which the exhaust gas flows to the purification inlet pipe 36. Accordingly, the relay pipe 66 is supported by the exhaust manifold 7, which is highly rigid. Its support structure with the exhaust gas purification device 2 via the relay pipe 66 can be formed to be highly rigid.

With the above-described configuration, by causing the motor in the exhaust throttle device 65 to operate on the basis of a pressure difference detected by a differential pressure sensor 44 in the exhaust gas purification device 2, regeneration control of a soot filter 40 is executed. In other words, when soot is accumulated on the soot filter 40, by controlling the exhaust throttle valve of the exhaust throttle device 65 to close to increase the exhaust pressure of the diesel engine 1, the temperature of the exhaust gas discharged from the diesel engine 1 is increased to high temperature, so that the soot accumulated on the soot filter 40 is burned. As a result, the soot disappears and the soot filter 40 is regenerated.

In addition, even if an operation (operation in which the soot is easily accumulated) in which a load is small and the temperature of the exhaust gas easily decreases is continuously performed, by causing the exhaust throttle device 65 to operate as an exhaust temperature increasing mechanism with forced increase in exhaust pressure, the soot filter 40 can be regenerated and an exhaust gas purification capability of the exhaust gas purification device 2 can appropriately be maintained. In addition, a burner or the like for burning the soot accumulated in the soot filter 40 becomes unnecessary. At the start of the diesel engine 1, by controlling the exhaust throttle device 65 to increase the exhaust pressure of the diesel engine 1, the exhaust gas from the diesel engine 1 can be increased to high temperature to accelerate warm-up of the diesel engine 1.

As described above, the exhaust throttle device 65 fastens an exhaust gas intake side of the throttle valve case 68 to the exhaust outlet of the exhaust manifold 7, which is caused to be upwardly opened, the relay pipe 66 is connected to the exhaust manifold 7 via the throttle valve case 68. Accordingly, the exhaust throttle device 65 can be supported by the exhaust manifold 7, which is highly rigid, the support structure of the exhaust throttle device 65 can be formed to be highly rigid. However, compared with, for example, a structure of connecting the throttle valve case 68 to the exhaust manifold 7 via the relay pipe 66, the capacity in the exhaust gas side of the exhaust throttle device 65 can be reduced and the exhaust pressure in the exhaust manifold 7 can accurately be adjusted. For example, the temperature of the exhaust pressure that is supplied to the exhaust gas purification device 2 or the like can easily be maintained at a temperature adapted for purifying the exhaust gas.

In addition, the throttle valve case 68 is fastened to an upper face side of the exhaust manifold 7, the relay pipe 66, which is elbow-shaped, is fastened to an upper face of the throttle valve case 68, the throttle valve case 68 and the relay pipe 66 are disposed in multi-layered form, and the relay pipe 66, which is in the uppermost layer, is connected to an exhaust pipe 72. Therefore, without changing the attitude of supporting the exhaust throttle device 65, and without changing the specifications of the relay pipe 66, the attitude (connection direction of the exhaust pipe 72) of attaching the relay pipe 66 can be changed in accordance with, for example, a position in which the exhaust gas purification device 2 is attached, etc.

In addition, the exhaust outlet of the exhaust manifold 7 is upwardly opened, the throttle valve case 68 is placed on the upper face side of the exhaust manifold 7, and the throttle valve outlet is formed in the upper face side of the throttle valve case 68. The EGR cooler 29 is disposed below the throttle valve case 68, with the exhaust manifold 7 provided therebetween. Accordingly, the exhaust manifold 7, the exhaust throttle device 65, and the EGR cooler 29 can compactly be disposed along one side face of the diesel engine 1.

In this manner, in the diesel engine 1, the relay pipe 66 is fastened to the upper face of the exhaust throttle device 65, the exhaust throttle device 65 and the relay pipe 66 are disposed in multi-layered form with respect to the exhaust manifold 7, and the exhaust gas inlet of the exhaust throttle device 65 is connected to the relay pipe 66, which is in the uppermost layer. Accordingly, the exhaust throttle device 65 can compactly be disposed between the exhaust manifold 7 and the exhaust gas purification device 2 in the vicinity of both, and the exhaust throttle device 65 can compactly be mounted in a limited engine installation space. In addition, only by changing the shape of the relay pipe 66, the exhaust gas purification device 2 can easily be disposed at a predetermined position.

The cooling water pipe path provided at the right side (the side of the exhaust manifold 7) of the diesel engine 1 will be described. The cooling water return hose 75, whose one end is connected to the cooling water pump 21, has the other end, to which the cooling water outlet pipe 76 of the water cooling case 70 is connected. The relay hose 78, whose one end is connected to the cooling water inlet pipe 77 of the water cooling case 70, has the other end, to which the cooling water discharge outlet of the EGR cooler 29 is connected. Also, the cooling water output hose of the EGR cooler 29 is connected to the cylinder block 4 via the cooling water output hose 79 (EGR cooler intake side pipe).

In other words, the EGR cooler 29 and the exhaust throttle device 65 are connected in series to the cooling water pump 21. In addition, in a cooling water circulation path formed by the hoses 75, 78, and 79, etc., the exhaust throttle device 65 is disposed between the cooling water pump 21 and the EGR cooler 29. The exhaust throttle device 65 is positioned at a downstream side of the EGR cooler 29. A portion of the cooling water from the cooling water pump 21 is supplied from the cylinder block 4 to the exhaust throttle device 65 via the EGR cooler 29, so that the cooling water is circulated.

In addition, in the water cooling case 70, the cooling water outlet pipe 76 and the cooling water inlet pipe 77 are respectively projected from their back face side (the side of the cooling fan 9) toward the cooling water pump 21. In other words, the water cooling case 70 is disposed at a rear side (the side of the cooling fan 9) than the throttle valve case 68 so that leading ends of the cooling water outlet pipe 76 and the cooling water inlet pipe 77 are directed to the cooling water pump 21. This can dispose the cooling water outlet pipe 76 of the water cooling case 70 so as to be close to the cooling water pump 21, so that the cooling water return hose 75 can be formed to be short. Also, the cooling water outlet pipe 76 is disposed on an upper side (exhaust throttle outlet side) of the cooling water inlet pipe 77.

As described above, the oil cooler 18 is disposed at the side of the intake manifold 6, and the EGR cooler 29, which is described later, is disposed at the side of the exhaust manifold 7, with the crank shaft 3 provided between both. In other words, in planar view, the oil cooler 18 is disposed at the side of the intake manifold 6, across the crank shaft 3 of the diesel engine 1, and the EGR cooler 29 is disposed at the side of the exhaust manifold 7. Thus, a cooling water circulation system for the EGR cooler 29 and a cooling water circulation system for the oil cooler 18 are divided to right and left sides, with the crank shaft 3 between both. This easily recognizes the arrangements of the cooling water circulation systems, enabling improvement in assembling operability and maintenance capability.

The exhaust throttle device 65 is disposed to be separated from the right side face of the head cover 8 so that a rotation axis direction (motor rotation axis direction in the actuator case 69) 65a of the exhaust throttle in the throttle valve case 68 is in parallel along the right side face of the head cover 8. In other words, in the exhaust throttle device 65, a left end face of the water cooling case 70 which is the closest to the right side face of the head cover 8 is in parallel to the right side face of the head cover 8 so as to be separated therefrom. Accordingly, a gap 8a is formed between the right side face of the head cover 8 and an inner side face of the exhaust throttle device 65. Note that in the exhaust throttle device 65, a right end face of the water cooling case 70 is in the farthest position from the right side face of the head cover 8.

The exhaust throttle device 65 has an outside face (right side face) that is provided opposing the machine frame 94 and that is flush with one side face (right side face) of the exhaust gas purification device 2, which is similarly provided opposing the machine frame 94. In other words, an exhaust inlet side face (right side face) of the exhaust gas purification device 2 and an outside face (right side face) of the exhaust throttle device 65 are flush with each other inside the machine frame 94. Although this can easily construct an engine room structure in which the machine frame 94 surrounds the diesel engine 1, the operability of assembling the diesel engine 1 with the exhaust gas purification device 2 disposed therein can easily be improved.

Also, with respect to the one side face (right side face) of the exhaust gas purification device 2 and the outside face (right side face) of the exhaust throttle device 65, which are formed to be flush with each other, also the outside face (right side face) of the alternator 23 is similarly formed to be flush. In other words, the outside face (right side face) of the alternator 23 which is provided opposing the machine frame 94 is formed to be flush with the one side face (right side face) of the exhaust gas purification device 2 which is provided opposing the machine frame 94. This can compactly dispose the one side face of the exhaust gas purification device 2, the outside face of the exhaust throttle device 65, and the outside face of the alternator 23 so as to be close to each other by causing both to face a flat vertical wall face of the machine frame 94, enabling compactly mounting of the diesel engine 1 in limited engine room space.

In planar view (top view), the exhaust throttle device 65 is disposed in position offset at the outside (right side) with respect to the purification inlet pipe 36 of the exhaust gas purification device 2. In other words, the throttle valve case 68 is disposed so as to be offset in position close to the machine frame 94 with respect the purification inlet pipe 36 of the exhaust gas purification device 2. In accordance therewith, in planar view (top view), the relay pipe 66 has an S shape in which the exhaust inlet side (the side of the exhaust throttle device 65) is outer than the exhaust outlet side (the side of the exhaust gas purification device 2).

In the exhaust throttle device 65, the actuator case 69 is disposed at a left rear end with respect to the throttle valve case 68, and the cooling water outlet pipe 76 and the cooling water inlet pipe 77 are vertically disposed at a rear left end of the water cooling case 70. In other words, in the back face side (the side of the cooling fan 9) of the water cooling case 70, between a left side face of the actuator case 69 and a right side face of the head cover 8, a sufficient space is reserved that allows the cooling water return hose 75 and the relay hose 78 to be provided. Thus, the cooling water return hose 75 and the relay hose 78 can easily be prevented from being damaged due to its contact with the engine body by mechanical vibration.

As illustrated in FIGs. 1, 3, 4, 7, 9, and 10, the exhaust manifold 7 is configured such that the exhaust pressure sensor pipe 85 is connected to the pressure output port 83. In other words, the pressure output port 83, which is provided on the upper face of the exhaust manifold 7, is connected to one end of an exhaust pressure sensor pipe 85 extending along the right side face of the head cover 8. Also, at the rear end side (the side of the cooling water pump 21) of the head cover 8, the exhaust pressure sensor 84 is installed. This exhaust pressure sensor 84 is connected to the other end of the exhaust pressure sensor pipe 85 via an exhaust pressure hose 86 (connection part) formed of a flexible rubber hose, etc.

In other words, the exhaust pressure sensor pipe 85 extends so as to pass through a gap 8a between the head cover 8 and the exhaust throttle device 65. Accordingly, a connection path from the pressure output port 83 of the exhaust manifold 7 through the exhaust pressure sensor 84 can be formed to be short without diverting other component parts, and a vibration preventing structure of the exhaust pressure sensor pipe 85 and the connection part can be simplified. In addition, the gap 8a also has a secured space between the left end face of the water cooling case 70, which is the closest to the head cover 8, and the head cover 8. Accordingly, cooling water pipes (the cooling water return hose 75 and the cooling water output hose 78 can be disposed in parallel at intervals with respect to the exhaust pressure sensor pipe 85. Therefore, the cooling water pipes can easily be prevented from being damaged due to its contact with the engine body by mechanical vibration.

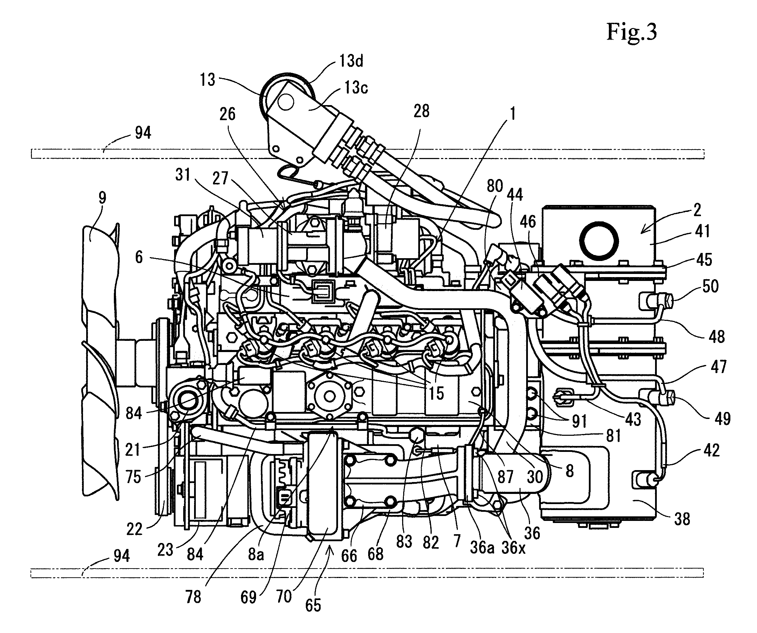

The pressure output port 83 is disposed on the upper face of the exhaust manifold 7 so as to be positioned between the cylinder head 5 and the relay pipe 66. Also, as illustrated in FIG. 3, on the upper face of the exhaust manifold 7, a gas temperature sensor 82 that measures an exhaust gas temperature in the exhaust manifold 7 is attached at an outer side (the relay pipe 66 side) than the pressure output port 83. As illustrated in FIGs. 2, 3, and 6 to 8, an electric wiring 87 of the gas temperature sensor 82 is allowed to pass through an upper portion of the front end (the side of the flywheel 9) of the head cover 8 so as to be connected to a connector on the left side.

As illustrated in FIGs. 6 and 7, a radiator 24 is disposed at the rear side of the diesel engine 1 at a position opposing the cooling fan 9 via a fan shroud (not illustrated). In addition, on the front face of the radiator 24, an oil cooler 25 is disposed so as to oppose the cooling fan 9. In this manner, the radiator 24 and the oil cooler 25 are disposed in one line at a position opposing the cooling fan 9 at the rear side of the diesel engine 1 toward a discharging direction of the cooling water in ascending order of radiation amount. Accordingly, rotational driving of the cooling fan 9 causes suction of outside air from behind the diesel engine 1, whereby outside air (cooling wind) blows onto each of the radiator 24 and the oil cooler 25, which are heat exchangers, so that both are air-cooled.

Next, the exhaust gas purification device 2 will be described with reference to FIGs. 1 to 3, 5 to 9, and 11 to 14. The exhaust gas purification device 2 is provided with an exhaust gas purification case 38 including the purification inlet pipe 36 and the purification outlet pipe 37. The exhaust gas purification case 38 is formed into a cylindrical shape that long extends in a horizontal direction. In addition, at the right side (the upstream side of exhaust gas moving direction) and left side (the downstream side of exhaust gas moving direction) of the exhaust gas purification case 38, the purification inlet pipe 36 and the purification outlet pipe 37 are respectively provided.

In addition, the exhaust gas purification device 2 is disposed at the front side of the cylinder head 5 and the head cover 8, with it fixed onto the flywheel housing 10. Then, the purification inlet pipe 36 is provided at the right rear side of the cylindrical shaped side face of the exhaust gas purification case 38. The purification inlet pipe 36 is formed to have a shape that is diagonally upwardly bent toward the rear side so as to be over the recirculation exhaust gas pipe 30, and is detachably fastened to the relay pipe 66 by bolt. On the other hand, the purification outlet pipe 37 is provided at a lower left side of the cylindrical shaped side face of the exhaust gas purification case 38, and a tail pipe 135 is connected to the purification outlet pipe 37.

Inside the exhaust gas purification case 38, a diesel oxide catalyst 39 (gas purification body), such as platinum, that generates nitrogen dioxide (NO2) and the soot filter 40 (gas purification body), which has a honeycomb structure and which consecutively oxidizes and removes collected particulate material (PM) at relatively low temperature, are arranged in series in an exhaust gas movement direction. Note that one side portion of the exhaust gas purification case 38 is formed by a muffler 41, and the muffler 41 is provided with the purification outlet pipe 37, which is connected to the tail pipe 135.

With the above-described configuration, nitrogen dioxide (NO2) generated by an oxidation action of the diesel oxidation catalyst 39 is supplied from one side end face (intake side end face) into the soot filter 40. The particulate material (PM) contained in the exhaust gas of the diesel engine 1 is collected by the soot filter 40, and is consecutively oxidized and removed by nitrogen oxide (NO2). In addition to removing the particulate material (PM) in the exhaust gas of the diesel engine 1, contents of carbon oxide (CO) and hydrocarbon (HC) are reduced.

In addition, an upstream side gas temperature sensor 42 and a downstream side gas temperature 43, which are thermistors, are attached to the exhaust gas purification case 38. An exhaust gas temperature on a gas inflow side end face of the diesel oxidation catalyst 39 is detected by the upstream side gas temperature sensor 42. An exhaust gas temperature on a gas outflow side end face of the diesel oxidation catalyst is detected by the downstream side gas temperature 43.

Further, a differential pressure sensor 44 as an exhaust gas pressure sensor is attached to the exhaust gas purification case 38. A pressure difference of the exhaust gas between the upstream side and downstream side of the soot filter 40 is detected by the differential pressure sensor 44. On the basis of the pressure difference of the exhaust gas between the upstream side and downstream side of the soot filter 40, an accumulation amount of the particulate material in the soot filter 40 is calculated, and a clogging state in the soot filter 40 can be grasped.

The differential pressure sensor 44, into which an electric wiring connector 51 is incorporated, as well as an electric wiring connector 55 for the gas temperature sensors 42 and 43, are supported by a substantially L-shaped plate sensor bracket (sensor support body). This sensor bracket 46 is detachably attached to a sensor support portion 56 formed in one arc body in an outlet sandwich flange 45. In other words, the sensor support portion 56 is formed in part of the outlet sandwich flange 45 at the muffler side, which is the closest from the purification inlet pipe 36. Also, by fastening a vertical plate portion of the sensor bracket 46 to the sensor support portion 56 with a bolt, the sensor bracket 46 is detachably attached to the outlet sandwich flange 45 at the muffle side. Note that the sensor bracket 46 may be fastened not only to the outlet sandwich flange 45 but also to another sandwich flange such as a center sandwich flange to be fastened when the exhaust gas purification case 38 is assembled.

One end side of each of the upstream side sensor pipe 47 and the downstream side sensor pipe 48 is connected to the differential pressure sensor 44. Sensor pipe boss bodies 49 and 50 respectively at the upstream side and the downstream side are disposed in the exhaust gas purification case 38, with the soot filter 40 in the exhaust gas purification case 38 is provided between both. The other sides of the upstream side sensor pipe 47 and the downstream side sensor pipe 48 are respectively connected to the sensor pipe boss bodies 49 and 50.

With the above-described configuration, a difference (exhaust gas difference pressure) between the exhaust gas pressure at the inflow side of the soot filter 40 and the exhaust gas pressure at the outflow side of the soot filter 40 is detected via the differential pressure sensor 44. A residual amount of the particulate material in the exhaust gas collected by the soot filter 40 is in proportion to the difference pressure of the exhaust gas. Thus, when the amount of particulate material remaining in the soot filter 40 has increased to a predetermined amount or more, on the basis of a detection result of the differential pressure sensor 44, regeneration control (for example, control that increases the exhaust temperature) that reduces the particulate material of the soot filter 40 is executed. Also, when the residual amount of the particulate material has further increased to or more than a range capable of regeneration control, a maintenance operation is performed in which by detaching and disassembling the exhaust gas purification case 38, and cleaning the soot filter 40, the particulate material is artificially removed.

Next, an attachment structure of the exhaust gas purification device 2 will be described. Regarding the exhaust gas purification case 38 in the exhaust gas purification device 2, the connected foot body 80 (left bracket) is detachably attached to the outlet sandwich flange 45 at the downstream side by bolt, and the fixed foot body 81 (right bracket) is fixed by welding. Then, an attachment boss portion of the connected foot body 80 is attached to a through-hole-formed foot body fastening body provided in the arc body of the outlet sandwich flange 45. In addition, the fixed foot body 81 is fixed to an outer circumferential face of the exhaust gas purification case 38 at the side of the purification inlet pipe 36 by welding. In other words, the fixed foot body 81 is disposed at the inlet side (upstream side) of the exhaust gas purification case 38, and the connected foot body 80 is disposed at the outlet side (downstream side) of the exhaust gas purification case 38. Note that the connected foot body 80 may be fastened not only to the outlet sandwich flange 45 but also another sandwich flange such as a center sandwich flange that is fastened when the exhaust gas purification case 38 is assembled.

Each of the connected foot body 80 and the head cover 8, which are provided on the outer circumference of the exhaust gas purification case 38, is fastened to a purification device attachment portion (DPF attachment portion) 89 formed at the upper face side of the flywheel housing 10 by bolt. In other words, the exhaust gas purification device 2 is stably connected and supported on the flywheel housing 10, which is a highly rigid member, by the connected foot body 80 and the fixed foot body 81. Therefore, although the exhaust gas purification device 2 is included in a vibration system of the diesel engine 1, the exhaust gas purification device 2 can tightly be connected to the flywheel housing 10, which is a highly rigid part as one of component parts of the diesel engine 1, so that the exhaust gas purification device 2 can be prevented from being damaged by vibration of the diesel engine 1. In a place where the diesel engine 1 is produced, the exhaust gas purification device 2 can be shipped with it mounted in the exhaust gas purification device 2. In addition, since the exhaust gas purification device 2 is allowed to communicate with the exhaust manifold 7 of the diesel engine 1 at close range, the exhaust gas purification device 2 can easily be maintained to have an appropriate temperature, so that high performance of exhaust gas purification can be maintained.

As described above, the exhaust gas purification device (DPF) 2 has a structure in which the diesel oxidation catalyst 39, which is, for example, platinum or the like, and the soot filter 40, which has a honeycomb structure, are arranged in parallel and accommodated in the DPF casing (the exhaust gas purification case 38) made of heat-resistant metal material via a cylindrical inner case (not illustrated). The exhaust gas purification device 2 is attached to the flywheel housing 10 via the connected foot body (connection foot body) 80 as a support body and the casing side bracket foot (fixed foot body) 81. In this case, one end side of the connected foot body 80 is detachably fastened to an outer circumferential side of the exhaust gas purification case 38 by bolt via the flange 45. One end side of the casing-side bracket foot 81 is fixed by welding so as to be incorporated onto an outer circumferential face of the DPF casing 38.

On the other hand, the other end side of the flange-side bracket foot 80 is detachably fastened onto the upper face (DPF attachment portion) of the flywheel housing 10 by a pre-attachment bolt 90 and a post-attachment bolt 91. In other words, bolt through-holes 90a and 91 a are formed in the flange-side bracket foot 80. In the DPF attachment portion 89, screw holes 90b and 91b are upwardly formed. The casing-side bracket foot 81 is placed on a flat upper face of the DPF attachment portion 89, and the pre-attachment bolt 91 and the post-attachment 92 are fastened to the screw holes 90b and 91b via the bolt through-holes 90a and 91a. The exhaust gas purification device 2 is detachably fixed to the upper face of the flywheel housing 78 via the flange-side bracket foot 80.

In addition, the other end side of the fixed foot body 81 is detachably fastened to the DPF attachment portion 89 on the upper face of the flywheel housing 10 by two post-attachment bolts 91. In other words, the bolt through-hole 91 a is formed in the casing-side bracket foot 81. The screw hole 91b is upwardly formed in the DPF attachment portion 89. The casing-side bracket foot 81 is placed on the flat upper face of the DPF attachment portion 89, and the post-attachment bolt 91 is fastened to the screw hole 91 b via the bolt through-hole 91 a, whereby the exhaust gas purification device 2 is detachably fixed to the upper face of the flywheel housing 10 via the casing-side bracket foot 81.

Further, in the other end side of the connected foot body 80, a notch groove 92 for engaging the pre-attachment bolt 90 into the bolt through-hole 90a is formed. The notch groove 92 is opened at a front end edge of the flange-side bracket foot 80 so that when the exhaust gas purification device 2 is mounted in the diesel engine 1, a hole portion of the notch groove 92 is positioned at the head. Note that an opened edge portion of the notch groove 92 is formed to taper having a shape (spread shape) widened toward the end.

With the above-described configuration, in the case of mounting the exhaust gas purification device 2 to the diesel engine 1, first, the pre-attachment bolt 90 is incompletely screwed to the DPF attachment portion 89 on the upper face of the flywheel housing 10 via the screw hole 90b. The DPF attachment portion 89 is caused to support the pre-attachment bolt 90 in a state in which the head of the pre-attachment bolt 90 is separated from the upper face of the DPF attachment portion 89 by a plate thickness of the flange-side bracket foot 80 or more than the plate thickness. In addition, a worker raises the exhaust gas purification device 2 with both hands, engages the screw hole 90b of the flange-side bracket foot 80 into the head of the pre-attachment bolt 90 via the notch groove 92, and thereby temporarily fixes the exhaust gas purification device 2 onto the upper face of the flywheel housing 10. In this state, the worker can remove both hands from the exhaust gas purification device 2.

After that, the flange-side bracket foot 80 and the casing-side bracket foot 81 are fastened to the DPF attachment portion 89 on the upper face of the flywheel housing 10 by three post-attachment bolts 91. Also, the inlet flange body 36a is fastened to the relay pipe 66 via an embedding bolt 36x and an inlet flange nut 36y, and the exhaust gas inlet pipe (purification inlet pipe) 36 is fixed to the relay pipe 66.

Next, by completely fastening the pre-attachment bolt 90 to the DPF attachment portion 89 on the upper face of the flywheel housing 10, the exhaust gas purification device 2 is detachably fixed to the exhaust gas outlet side of the relay pipe 66 and the upper face of the flywheel housing 10, whereby an operation of mounting the exhaust gas purification device 2 to the diesel engine 1 is completed. Note the following: at the front side of the attachable/detachable direction of the DPF casing 38, the bolt through-hole 90a for bolt insertion is opened on the front side edge of the flange-side bracket foot 80 via the notch groove 92. Thus, in a state in which the pre-attachment bolt 90 has been temporarily mounted in an incomplete fastening (semi-fixing) attitude, by raising the DPF casing 38 with both hands to move the DPF casing 38 to the attachment region of the diesel engine 1 (or the machine), that is, to the upper face of the flywheel housing 10, the bolt through-hole 90a can be engaged into the pre-attachment bolt 90 via the notch groove 92.

When the diesel engine 1 to which the exhaust gas purification device 2 has been mounted is viewed from the upper face of the diesel engine 1, an attachment position of the pre-attachment bolt 90 in the DPF attachment portion 89 overlaps with a piping position of the EGR gas output pipe 61. Also, the attachment position of the post-attachment bolt 91 in the DPF attachment portion 89 does not overlap with the piping position of the recirculation exhaust gas pipe 61. In other words, although the screw hole 90b in the DPF attachment portion 89 is disposed at the lower side of the recirculation exhaust gas pipe 61, which is provided in the front of the cylinder head 5, is disposed, in planar view, the screw hole 91 b is disposed at a position off the piping position of the recirculation exhaust gas pipe 61.

Accordingly, when the worker temporarily fixes the pre-attachment bolt 90 to the DPF attachment portion 89, the worker screws the pre-attachment bolt 90 to the screw hole 90b, which is positioned below the recirculation exhaust gas pipe 61. However, since this is before the exhaust gas purification device 2 is mounted, the pre-attachment bolt 90 can easily be attached from the front side (the front side of the flywheel housing 10) of the diesel engine 1. In addition, after the pre-attachment bolt 90 is temporarily fixed, by causing lower faces of the foot bodies (bracket feet) 80 and 81 to be along an upper face of the DPF attachment portion 89, the exhaust gas purification device 2 can be slid from the front side (the front side of the flywheel housing 10) of the diesel engine 1 toward the front side of the cylinder head 5. In other words, by sliding the exhaust gas purification device 2 so that the pre-attachment bolt 90 can pass through the notch groove 92, the foot bodies (bracket feet) 80 and 81 are installed on the DPF attachment portion 89.

This places the exhaust gas purification device 2 on the DPF attachment portion 89 in a state in which the bolt through-hole 90a of the connected foot body 80 is engaged with the pre-attachment bolt 90. Then, the bolt through-hole 91a of the foot bodies (bracket feet) 80 and 81 is positioned at the upper side of the screw hole 91 b of the DPF attachment portion 89. In addition, the worker can confirm, from the upper side of the diesel engine 1, the positions of the bolt through-hole 91a and the screw hole 91b which vertically overlap and communicate with each other, at a position that is a periphery of the recirculation exhaust gas pipe 61. In other words, since the bolt through-hole 91a d and the screw hole 91b are positioned so as not to overlap with the recirculation exhaust gas pipe 61 in planar view, the post-attachment bolt 91 can be fastened after being inserted from directly above the bolt through-hole 91a and the screw hole 91b.

When the mounting is performed as described above, the worker can fasten the flange-side bracket foot 80 and the casing-side bracket foot 81 by tightening the post-attachment bolt 91 (bolt), with the hands separated from the DPF casing 38. Note that the exhaust gas purification device 2 can be detached in a procedure reverse to the above. As a result, the exhaust gas purification device 2 (the DPF casing 38) can stably be connected and supported above the flywheel housing 10, which is highly rigid member, by the bracket feet 80 and 81 and the relay pipe 66. In addition, the operation of attaching/detaching the exhaust gas purification device 2 to the diesel engine 1 can be executed by one worker.

In this manner, the diesel engine 1 is provided with the exhaust gas purification device 2, which treats exhaust gas, and the exhaust gas purification device 2 is disposed at the upper face side of the diesel engine 1. In addition, the diesel engine 1 has a structure in which either the engine 1 or the exhaust gas treatment device 2 is provided with the temporary locking body 90, and the other one is provided with the temporary locking notch 92. The temporary locking body 87 or the temporarily locking notch 92 is disposed at the lower side of an attachment part. Accordingly, the post-attachment bolt 91 of the exhaust gas purification device 2 can be fastened at a position off the attachment part, so that operability of attaching or detaching the exhaust gas purification device 2 can be improved.

The diesel engine 1 has a structure in which the exhaust gas purification device 2 is installed in the flywheel housing 10, and in which the recirculation exhaust gas pipe 61 extends as an attachment part between the diesel engine 1 and the exhaust gas purification device 2. Accordingly, by diverting the recirculation exhaust gas pipe 61 at a side face (front-side side face) of the diesel engine 1, an attaching height can compactly be formed. Further, by temporarily fixing and supporting the exhaust gas purification device 2 at the upper face side of the flywheel housing 10 via the temporary locking body 90, a fastening operability can be improved.

In addition, in the diesel engine 1, the exhaust outlet pipe (relay pipe) 66 is fixed to the exhaust manifold 7 via the exhaust throttle valve case (throttle valve case) 68, and the exhaust outlet pipe 66 is connected to the inlet pipe 36 of the exhaust gas purification device 2. Accordingly, only by altering the specification of the exhaust outlet pipe 66, the attachment position, etc., of the exhaust gas purification device 2 can easily be altered, so that the diesel engine 1 provided with the exhaust gas purification device 2 can be installed so as to be easily adapted for the engine room space of each working vehicle.

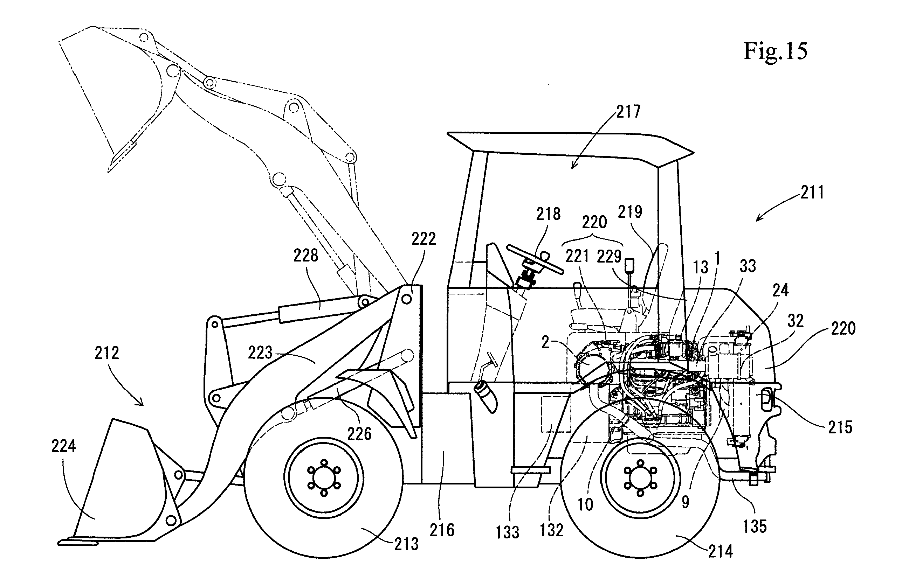

A working vehicle in which the above-described diesel engine 1 is installed will be described with reference to FIGs. 15 to 18 on the basis of the drawings. FIGs. 15 to 18 are diagrams illustrating a wheel loader as a working vehicle.

A wheel loader 211 illustrated in FIGs. 15 to 18 is provided with a traveling machine body 216 including pairs of right and left front wheels 213 and rear wheels 214. The traveling machine body 216 is provided with a steering part 217 and the diesel engine 1. The traveling machine body 216 includes a loader device 212 as a working part, mounted to a front side portion thereof, and is configured to be able to perform a loader operation. In the steering part 217, a steering seat 219 on which an operator sits, a steering handle 218, operation means that operate output of the diesel engine 1, etc., levers or switches, etc., as operation means for the loader device 212 are disposed.

Above the front wheels 213 in the front portion of the wheel loader 211, as described above, a loader device 212 as a working part is provided. The loader device 212 includes: loader posts 222 disposed on both right and left sides of the traveling machine body 216; a pair of right and left lift arms 223 connected to respective upper ends of the loader device 222 so as to be vertically swingable; and a bucket 224 connected to leading ends of the right and left lift arms 223 so as to be vertically swingable.

Between the loader posts 222 and the lift arms 223, which correspond to the loader posts 222, lift cylinders 226 for vertically swinging the lift arms 223 are respectively provided. Between the right and left lift arms 223 and the bucket 224, bucket cylinders 228 that vertically swing the bucket 224 are provided. In this case, by the operator on the steering seat 219 operating a loader lever (not illustrated), the lift cylinders 226 and the bucket cylinders 228 are operated to extend and contract, whereby the lift arms 223 and the bucket 224 are vertical swung so as to execute a loader operation.

In this wheel loader 211, the engine 1 is disposed so that below the steering seat 219, the flywheel housing 10 is positioned at the front side of the traveling machine body 216. In other words, the engine 1 is disposed so that the orientation of its engine output shaft is along a front-back direction in which the loader device 212 and a counter weight 215 are arranged. Further, behind the engine 1, at a front rear side of the cooling fan 9, the oil cooler 25 and the radiator 24 are disposed in order from the front. Also, at an upper front side of the engine 1, the exhaust gas purification device 2 fixed to the upper portion of the flywheel housing 10 is disposed.

In the exhaust gas purification device 2, its purification inlet pipe 36 is directly connected to an exhaust outlet 71 of the exhaust manifold 7, which is installed at a right side of the engine 1. This exhaust gas purification device 2 is disposed so that the moving direction of its exhaust gas is in the same direction. In other words, exhaust gas that flows from the purification inlet pipe 36 into the purification case 38 flows from the right side to the left side in the purification case 38, so that particulate material (PM) is removed. Further, the purified exhaust gas is released outside through the tail pipe 135, which is connected on a lower-left-side side face of the exhaust gas purification device 2.

Also, the engine 1 is connected in its left side to the air cleaner 32, which sucks in fresh air (outside air). The air cleaner 32 is disposed at a rear left side of the engine 1 at a position separated from the exhaust gas purification device 2, which is heated by waste heat based on the exhaust gas. In other words, the air cleaner 32 is disposed at a left side of the radiator 24 behind the engine 1 at a position where the air cleaner 32 is not affected by heat from the exhaust gas purification device 2. Accordingly, the air cleaner 32, which includes a resin mold article and is thermally weak, can be inhibited from being affected, such as deformation, due to waste heat based on exhaust gas passing through the exhaust gas purification device 2.

In this manner, the engine 1, the exhaust gas purification device 2, the radiator 24, and the air cleaner 32, which are disposed below and behind the steering seat 219, are covered with a bonnet 220 disposed at the upper side of the counter weight 215. This bonnet 220 is formed as a sheet frame 221 (front cover portion) projecting from a floor face of the steering part 217, and front portion and rear portion of the steering part 217 are formed as an openable/closable bonnet cover 229 (projecting cover portion).

In other words, by covering an upper part of the front portion of the engine 1 with the sheet frame 221, the sheet frame 221 also covers the exhaust gas purification device 2, which is disposed at the upper front side of the engine 1. Also, with a shape that convers the engine 1 from above the rear side of the engine 1 to behind the engine 1, the bonnet cover 229 also covers the radiator 24 and the oil cooler 25, which are disposed behind the engine 1.

At the upper side of the sheet frame 221 of the bonnet 220, the steering seat 219 is detachably placed. This releases the upper face of the sheet frame 221 when the steering seat 219 is separated from the sheet frame 221. Thus, the engine 1, the exhaust gas purification device 2, etc., below the sheet frame 221, can be maintained. Note that, without limiting to a configuration in which the steering seat 219 can detachably be provided, by the steering seat 219 inclining in the front side above the sheet frame 221, the upper face of the sheet frame 221 may be released. Then, as in the example illustrated in FIG. 16, the upper side of the engine 1 or the like may be released such that the sheet frame 221 itself, in which the steering seat 219 is fixedly installed, inclines to the front side.

By the bonnet 220 having in its front side the sheet frame 221, whose upper face is openable, when the upper face of the sheet frame 221 is closed, the exhaust gas purification device 2 disposed at the upper front side of the diesel engine 1 is covered. Accordingly, the exhaust gas purification device 2 can be prevented from having a decrease in temperature caused by weather and the like, and the exhaust gas purification device 2 is easily maintained to appropriate temperature. In addition, a possibility that the worker may touch the exhaust gas purification device 2 can be reduced. Also, when the upper face of the sheet frame 221 is opened, the upper front side of the engine 1 is released. This facilitates accessing of the exhaust gas purification device 2 disposed at the upper front side of the engine 1, so that the maintenance operation is easily performed.

Also, the bonnet 220 has, behind the wheel loader 211, the bonnet cover 229, which is upwardly projected from the upper face of the sheet frame 221. This bonnet cover 229 is disposed at the upper side of the counter weight 215, thus covering the radiator 24 and the oil cooler 25, which are disposed behind the engine 1 and are formed to be openable and closable. That is, as in the example illustrated in FIG. 17, a hinge portion 230 at an upper front side of the bonnet cover 229 is formed so as to be pivotally supported in a rotatable manner, and by rotating the EGR cooler 29 upwardly at the front side, the rear upper side of the engine 1 may be released. Then, by causing the bonnet cover 229 to be connected to the traveling machine body 216 via a hydraulic damper or the like, the bonnet cover 229 may be supported when being opened.

In the diesel engine 1, a transmission case 132 is connected to a front end side of the flywheel housing 10. Power from the engine 1 via the flywheel 11 is changed in speed if necessary by the transmission case 132, and is transmitted to the front wheels 213, the rear wheels 214, and a hydraulic driving source 133 such as the lift cylinders 226 and the bucket cylinders 228.

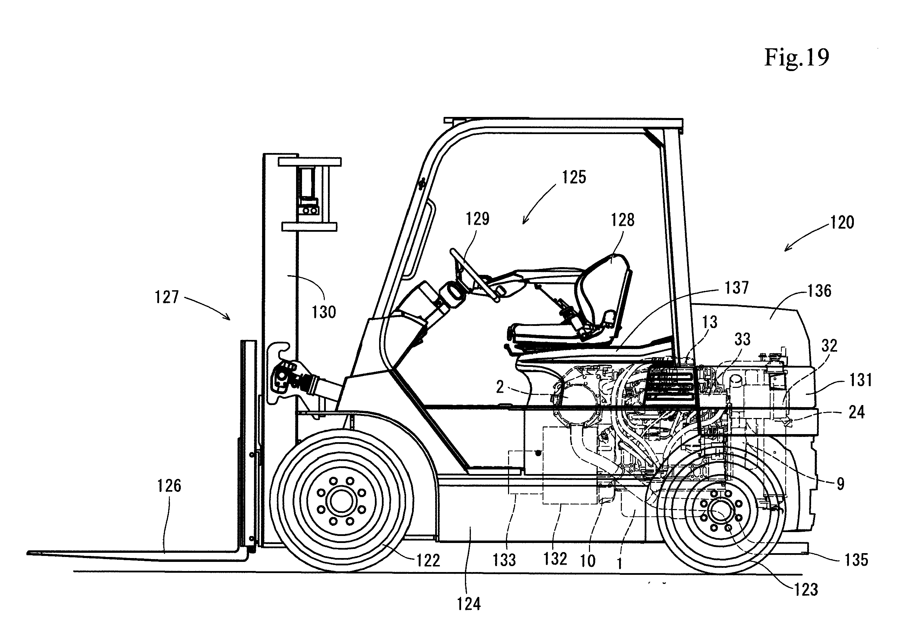

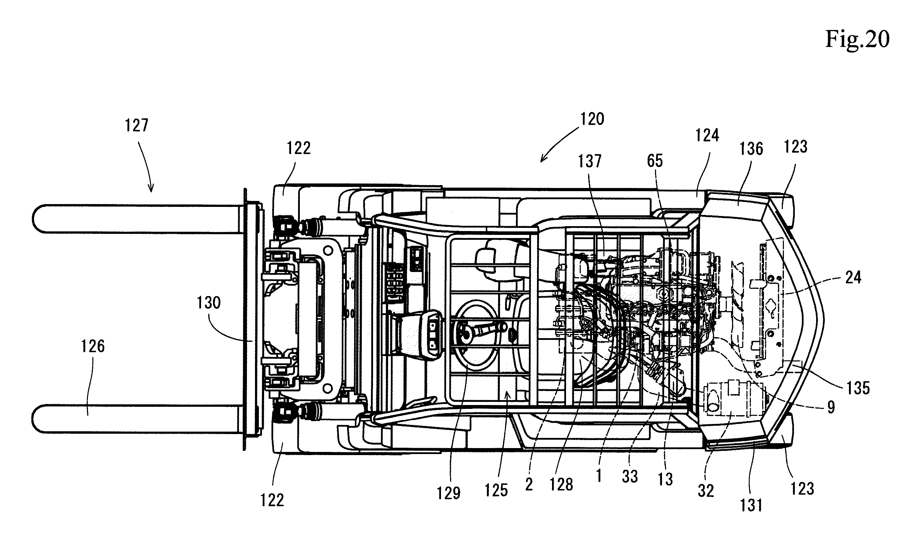

In addition, a structure in which the above-described diesel engine 1 is installed in a forklift car 120 will be described with reference to FIGs. 19 and 20. As illustrated in FIGs. 19 and 20, the forklift car 120 is provided with a traveling machine body 124 including pairs of right and left front wheels 122 and right and left rear wheels 123. In the traveling machine body 124, a steering part 125 and the engine 1 are installed. At a front side portion of the traveling machine body 124, a working part 127 that includes a fork 126 for cargo work is provided. In the steering part 125, a steering seat 128 on which an operator sits, a steering handle 129, operation means that operate output of the engine 1, etc., levers or switches of the like as an operation means for the working part 127 are disposed.

In a mast 130 that is a component element of the working part 127, the fork 126 is disposed so as to move up and down. By moving up and down the fork 126, a palette (not illustrated) loaded with goods is placed on the fork 126, and by moving the traveling machine body 124 back and forward, cargo operation, such as transportation of the palette, can be executed.

In this forklift car 120, the engine 1 is disposed at a lower side of the steering seat (driver's seat) 128, and the flywheel housing 10 is disposed so as to be positioned at a front side of the traveling machine body 124. Further, the exhaust gas purification device 2 is disposed at an upper front side of the flywheel 11. In other words, the exhaust gas purification device 2 is disposed above the flywheel housing 10 provided in the front of the engine 1. In addition, behind the engine 1, the radiator 24 and the oil cooler 25 are disposed at positions opposing the cooling fan 9, and the air cleaner 32, which is connected to the right side of the engine 1 is disposed at a left side of the radiator 24, which is at the rear left side.

In this manner, the engine 1, the exhaust gas purification device 2, the radiator 24, and the air cleaner 32, which are disposed below and behind the steering seat 128, are covered with a bonnet 136 disposed at an upper side of a counter weight 131. Further, the bonnet 136 is formed with its upper-face front portion made openable and with the steering seat 128 made detachable so that a worker can access the engine 1 and the exhaust gas purification device 2 in the bonnet 136. Also, also a rear portion of the bonnet 136 is formed to openable and closable.

As described above, regarding the diesel engine 1, the diesel engine 1 is disposed so that the orientation of the crank shaft 3 is along the front-back direction in which the working part 127 and the counter weight 131 are arranged. The transmission case 132 is connected at the front face side of the flywheel housing 10. The power from the diesel engine 1 via the flywheel 11 is changed in speed as required, and is transmitted to the hydraulic driving source 133 for the front wheels 122, the rear wheels 123, and the fork 126.

Note that the invention of the present application is not limited to the above-described embodiments, but can be embodied in various modes. For example, an engine device according to the invention of the present application is widely applicable not only the forklift car 120 and the wheel loader 211 as described above, but also to various types of working machines such as farm machines such as tractors, and specialized operation vehicles such as cranes. In addition, the configurations of the respective portions in the invention of the present application are not limited the illustrated embodiments, but can variously be modified without departing from the gist of the invention of the present application.

### Description of the Reference Numeral

- 1: diesel engine
- 2: exhaust gas purification device
- 7: exhaust gas manifold
- 10: flywheel
- 13: oil filter
- 13a: oil pipe
- 13b: oil pipe
- 13c: oil pipe connection portion
- 13d: filter portion
- 18: oil cooler
- 18a: cooling water pipe
- 18b: cooling water pipe
- 18c: cooling water connection portion
- 18d: oil pipe connection portion
- 29: EGR cooler
- 30: recirculation exhaust gas pipe
- 36: purification inlet pipe
- 36a: inlet flange body
- 36x: embedding bolt
- 36y: inlet flange nut
- 65: exhaust throttle device
- 66: relay pipe
- 68: throttle valve case
- 69: actuator case
- 70: water cooling case
- 75: cooling water return hose
- 76: cooling water outlet pipe
- 77: cooling water inlet pipe
- 78: relay hose
- 79: cooling water output hose
- 80: connected foot body
- 81: fixed foot body
- 82: gas temperature sensor
- 83: pressure output port
- 84: exhaust pressure sensor
- 85: exhaust pressure sensor pipe
- 86: exhaust pressure hose

## Claims

1. An engine device comprising an exhaust gas treatment device that treats exhaust gas from an engine, in which the exhaust gas treatment device is disposed on an upper face side of the engine,
wherein the engine device has a structure in which either the engine or the exhaust gas treatment device is provided with a temporary locking body, and the other one is provided with a temporary locking notch, and
wherein the temporary locking body and the temporary locking notch are disposed on a lower side of an attachment part of the engine.

2. The engine device according to claim 1, wherein the engine device has a structure in which the exhaust gas treatment device is mounted on a flywheel housing, and a recirculation exhaust gas pipe as the attachment part extends between the engine and the exhaust gas treatment device.

3. The engine device according to claim 1 or 2, wherein an exhaust outlet pipe is fixed to an exhaust manifold for the engine via a throttle device, and the exhaust outlet pipe is connected to an inlet pipe of the exhaust gas treatment device.

4. The engine device according to claim 3, wherein the exhaust outlet pipe is S-shaped in planar view.

5. The engine device according to claim 1,
wherein the engine device has a structure provided with an engine frame on which the engine and the like are mounted,
wherein an exhaust manifold installation portion of the engine is provided with an exhaust throttle device, and
wherein one side face of the exhaust gas treatment device, which faces the engine frame, and an outer side face of the exhaust throttle device are formed to be flush.

6. The engine device according to claim 5, wherein one side face of the exhaust gas treatment device, and also an outer side face of an alternator with respect to an outer side face of the exhaust throttle device are formed to be flush.

7. The engine device according to claim 5 or 6, wherein the exhaust throttle device is offset with respect to a gas inlet of the exhaust throttle device.
